# EUROPEAN PATENT APPLICATION

(11) **EP 2 012 542 A2**
(43) Date of publication of application: **07.01.2009**
(21) Application number: 08153636.9
(22) Date of filing: 28.03.2008
(51) Int. Cl.: H04N 7/173

(54) **Method and apparatus for providing content through bidirectional communication network**

(30) Priority: 09.05.2007 KR 20070045100
(71) Applicant: Samsung Electronics Co., Ltd., Suwon-si, Gyeonggi-do 442-742 (KR)
(72) Inventor: Kim, Yong-ku, Gyeonggi-do (KR); Shim, Hyo-sun, Gyeonggi-do (KR); Lim, Myong-kyun, Seoul (KR)
(74) Representative: Brandon, Paul Laurence

(57) **Abstract**

Provided are a method and apparatus (100) for providing content. The apparatus includes a content acquisition information storage unit (130) to store content acquisition information that is identified by a content identifier for content acquired through a bidirectional communication network and necessary to acquire the content by communication with a server that provides the content, a controller to allocate reduction information to the content acquisition information, and to search for the content acquisition information corresponding to the inputted reduction information when reduction information of the content is input, and a communicator to acquire the content from the server using the content acquisition information. Accordingly, a user can acquire Internet content through a communication network by selecting reduction information allocated to the Internet content.

## Description

### BACKGROUND OF THE INVENTION

### 1. Field of the Invention

Aspects of the present invention relate to methods and apparatus to provide content.

### 2. Description of the Related Art

Internet protocol television (IPTV) service is a bidirectional TV service provided using a high speed Internet network. IPTV is currently being commercialized. A bidirectional broadcast receiver is connected to the Internet in order to provide various services via bidirectional communication. Users are familiar with a conventional user interface operation, such as selecting/changing a broadcast channel. However, the user may not be familiar with a new user interface to acquire a service through a bidirectional communication network.

### SUMMARY OF THE INVENTION

Preferred embodiments of the present invention aim to provide a method and apparatus to provide content that enable a user to easily access and use content acquired through a bidirectional communication network.

According to an aspect of the present invention, a method of providing content is provided. The method includes allocating reduction information to content acquisition information that is identified by a content identifier for content acquired through a bidirectional communication network and necessary to acquire content by communication with a server that provides the content; searching for the content acquisition information corresponding to the inputted reduction information when reduction information of the content is input; and acquiring the content from the server using the content acquisition information.

According to another aspect of the present invention, an apparatus to provide content is provided. The apparatus includes a content acquisition information storage unit to store content acquisition information that is identified by a content identifier for content acquired through a bidirectional communication network and necessary to acquire the content by communication with a server that provides the content; a controller to allocate reduction information to the content acquisition information, and to search for the content acquisition information corresponding to the inputted reduction information when the reduction information of the content is input; and a communicator to acquire the content from the using the content acquisition information.

Additional aspects and/or advantages of the invention will be set forth in part in the description which follows and, in part, will be obvious from the description, or may be learned by practice of the invention.

### BRIEF DESCRIPTION OF THE DRAWINGS

The invention will become apparent more readily appreciated from the following description of the embodiments, taken in conjunction with the accompanying drawings of which:
FIG. 1 is block diagram illustrating an apparatus for providing content according to an embodiment of the present invention;
FIG. 2 is a diagram illustrating a screen for providing a service in an apparatus to provide content according to an embodiment of the present invention;
FIGs. 3A and 3B are diagrams illustrating a screen providing a channel list according to an embodiment of the present invention;
FIGs. 4A and 4B are diagrams illustrating a screen providing a channel search list according to an embodiment of the present invention;
FIGs. 5A through 5C are diagrams illustrating a screen, in which a channel setting operation is being performed, in an apparatus to provide content according to an embodiment of the present invention;
FIG. 6 is a flowchart illustrating a process of storing content acquisition information about content and allocating reduction information to the content acquisition information according to an embodiment of the present invention; and
FIG. 7 is a flowchart illustrating a process of providing content through a bidirectional communication network according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

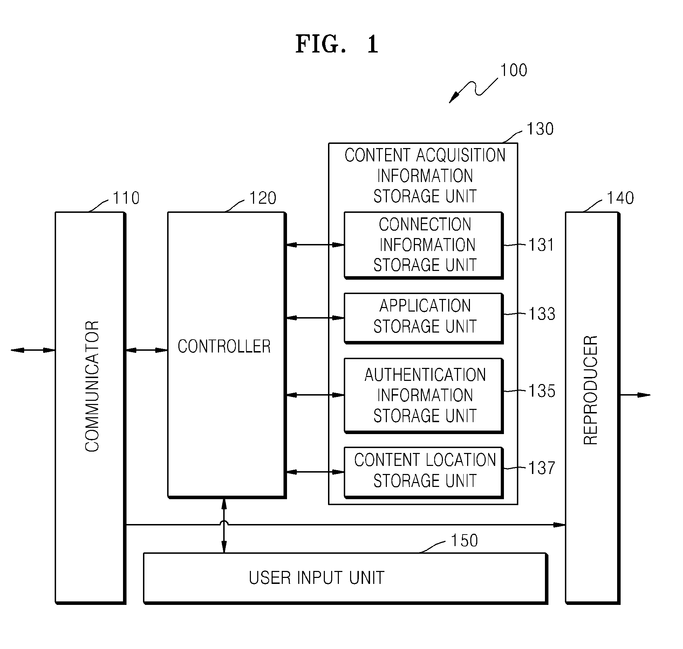

FIG. 1 is a block diagram of an apparatus 100 to provide content according to an embodiment of the present invention. The apparatus 100 includes a communicator 110, a controller 120, a content acquisition information storage unit 130, a reproducer (or reproduction unit) 140, and a user input unit 150. According to other aspects of the present invention, the apparatus 100 may include additional and/or different units. Similarly, the functionality of two or more of the above units may be combined into a single unit. The apparatus 100 may be a set-top box, a desktop computer, a laptop computer, a mobile Internet protocol television (IPTV) receiver, a personal digital assistant (PDA), a mobile phone, a personal entertainment device, or any device that can receive and provide content through a bidirectional communication network.

Content, as used herein, refers to data acquired through a bidirectional communication network and provided to a user. Examples of such content include broadcast content that can be received through an Internet broadcast, a video on demand (VOD) service about various multimedia, audio, a user creative content (UCC) service, or the like, but is not limited in type or form. The network may be any type of network accessible over any type of wireless or wired medium, such as cable, fiber optic, Ethernet, or Wi-Fi.

The communicator 110 acquires content through a bidirectional communication network by communicating with at least one server that provides content (not shown). As used herein, a server refers to any type of content source. The server may be managed by a broadcasting station or a service provider that collects and serves content.

The controller 120 forms and manages content acquisition information. The content acquisition information is identified by a content identifier for the content and is required to acquire the content. The content acquisition information may be required to acquire content through a bidirectional communication network, such as the Internet. The content acquisition information may vary in form or range.

The content identifier may be obtained from an electronic program guide (EPG) or location information showing an actual location of Internet content in the server, or from another source. For example, when content is a drama called Jumong, a content identifier may be 'jumong' and included in EPG information or obtained from location information of the content, e.g., http://www/imbc.com/broad/tv/drama/ jumong/vod/ index.html. The content acquisition information may be obtained via a communication between a user and the server, and stored in the content acquisition information storage unit 130.

The controller 120 allocates reduction information to the content acquisition information and manages the reduction information. If the content is a serial drama, reduction information may be allocated to content acquisition information about content of one series. The reduction information is given so as to ensure easy access to content acquired through the bidirectional communication network. The reduction information can be allocated according to a user input signal or a predetermined rule. For example, a channel, such as a conventional broadcast channel, can be allocated to the content acquisition information about Internet content as the reduction information. When the reduction information about the content is input, for example when the user inputs a predetermined piece of reduction information to the user input unit 150, the controller searches for content acquisition information corresponding to the inputted reduction information.

The content acquisition information storage unit 130 stores the content acquisition information. The content acquisition information storage unit 130 includes a connection information storage unit 131, an application storage unit 133, an authentication information storage unit 135, and a content location storage unit 137, as shown in FIG. 1, although the units shown are not required in all aspects of the invention.

The connection information storage unit 131 stores network connection information that may be required to connect to at least one server. The connection information may be an IP address or other live locator information. The application storage unit 133 stores a predetermined application in order to execute the content. The application may include an application to secure the content and/or an application to reproduce the content. The authentication information storage unit 135 stores authentication information that provides authentication to the server, when the server requests authentication to provide the content. The content location storage unit 137 stores the location information identifying an actual location of the content in the server.

The content acquisition information storage unit 130 may further include a storage block (not shown) that stores other information that may be included in the content acquisition information. For example, when payment should be made to acquire Internet content, the content acquisition information storage unit 130 may further store information required to perform a payment process as the content acquisition information.

The controller 120 may include a management module (not shown) to manage the connection information storage unit 131, the application storage unit 133, the authentication information storage unit 135, and the content location storage unit 137.

The controller 120 may manage table information that identifies a location of information forming the content acquisition information in the content acquisition information storage unit 130, in order to search for the content acquisition information corresponding to the reduction information selected according to the user input signal. The table information may include, for example, the reduction information, the content identifier, information identifying a location of the connection information in the connection information storage unit 131, information identifying a location of the application in the application storage unit 133, information identifying a location of the authentication information in the authentication information storage unit 135, and information identifying a location of the content in the server.

When the server requests user authentication, payment of a content usage fee, or installation of an application to provide content, the controller 120 may process a request from the server without additional user input, using the information included in the content acquisition information. Accordingly, the user may access the content right before the content is reproduced, through the bidirectional communication network, by inputting only the reduction information.

The communicator 110 acquires content located in the server using the content acquisition information obtained according to the control of the controller 120. The communicator 110 accesses the server using the connection information through a bidirectional communication network, such as the Internet, and accesses the content using the content location information. When the communicator 110 receives a request to update the application from the server, the controller 120 updates the application using the latest information provided from the server through the communicator 110.

The user input unit 150 receives and transmits the user input signal to the controller 120, and the controller 120 controls the apparatus 100 based on the user input signal. The user input unit 150 may be a keyboard, a mouse, a touchpad, a microphone, a touchscreen, or other device capable of receiving input from the user.

The reproducer 140 processes and outputs data, such as audio or video forming the content received through the Internet. When a user input signal, which requests the reproduction of the acquired Internet content, is input via the user input unit 150, the reproducer 140 processes and outputs the Internet content received from the communicator 110 according to the control of the controller 120. The output data may be displayed on a screen for a display. The display may be included in the apparatus 100 or connected thereto.

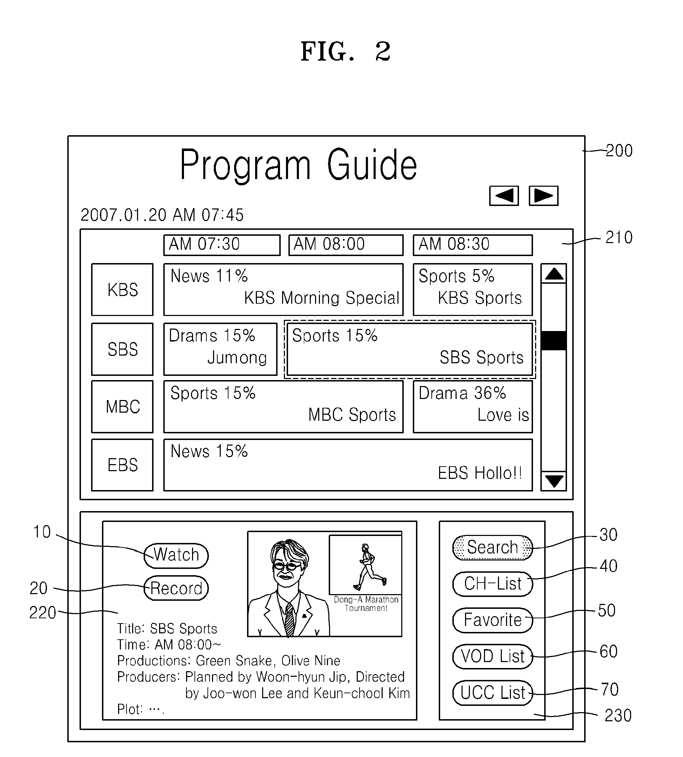

Hereinafter, a screen 200 for providing a service in the apparatus 100 will be described with reference to FIGS. 2 through 5B, when Internet content is mainly an Internet broadcast program. FIG. 2 shows a screen 200 to provide a service in the apparatus 100 according to an embodiment of the present invention.

FIG. 2 shown the screen 200, in which an application that provides an Internet broadcast program guide is being executed in the apparatus 100. The screen 200 includes Internet broadcast program information 210, a window 220 to provide detailed information about an Internet broadcast program selected according to a user input signal from among the Internet broadcast program information 210, and a window 230 to provide an icon list including icons for executing operations related to Internet broadcast content according to a user input. According to other aspects of the invention, the screen 200 may include additional and/or different windows (or other elements), and the windows (or other elements) may be arranged on the screen 200 in any fashion.

The window 220 provides a watch icon 10 and a record icon 20 with detailed information about a broadcast program. The user may acquire and view a broadcast program, which is provided on the window 220, through a communication network using the watch icon 10. The user may record or reserve recording the broadcast program by using the record icon 20.

The window 230 may be provided on the same or a separate screen. The window 230 includes a search icon 30, a channel list (CH-List) icon 40, a favorite icon 50, a VOD list icon 60, and a UCC list icon 70, and may include additional or different icons as well.

The search icon 30 is an icon to execute a program search function in the Internet broadcast. As shown in FIG. 2, the user may search for the Internet broadcast program using the search icon 30. The apparatus 100 provides a user interface (Ul) that enables the user to set a search condition. When the search icon 30 is selected, the apparatus 100 executes the program search function according to the set search condition, and provides a list generated as the result of the search.

The channel list icon 40 provides a list including Internet broadcast channels. When the user has included a frequently viewed service channel, a favorite channel, or a service provider on a Favorite list, the favorite icon 50 provides a Favorite list. The VOD list icon 60 is an icon to provide a VOD list stored in the apparatus 100 to the user. The UCC list icon 70 is an icon to provide a UCC list stored in the apparatus 100 or that is frequently watched, to the user.

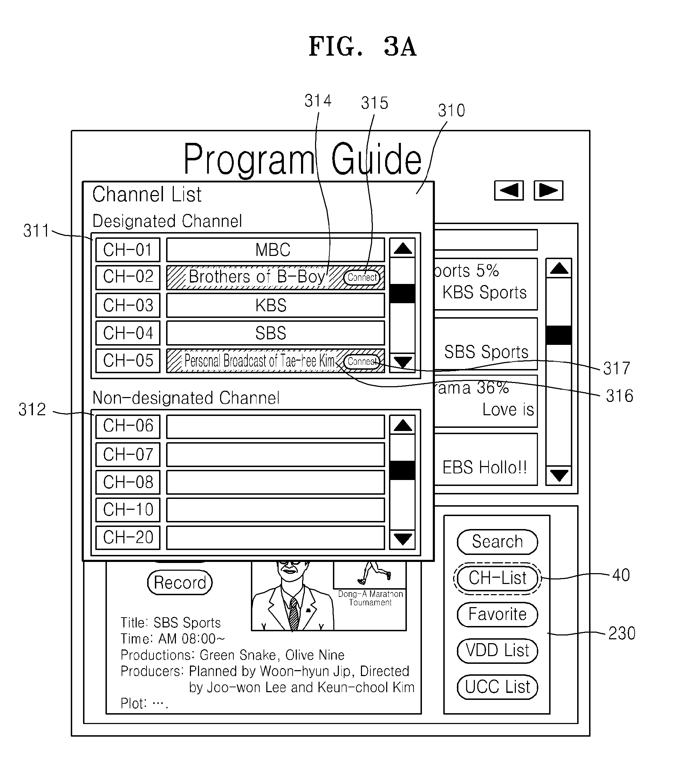

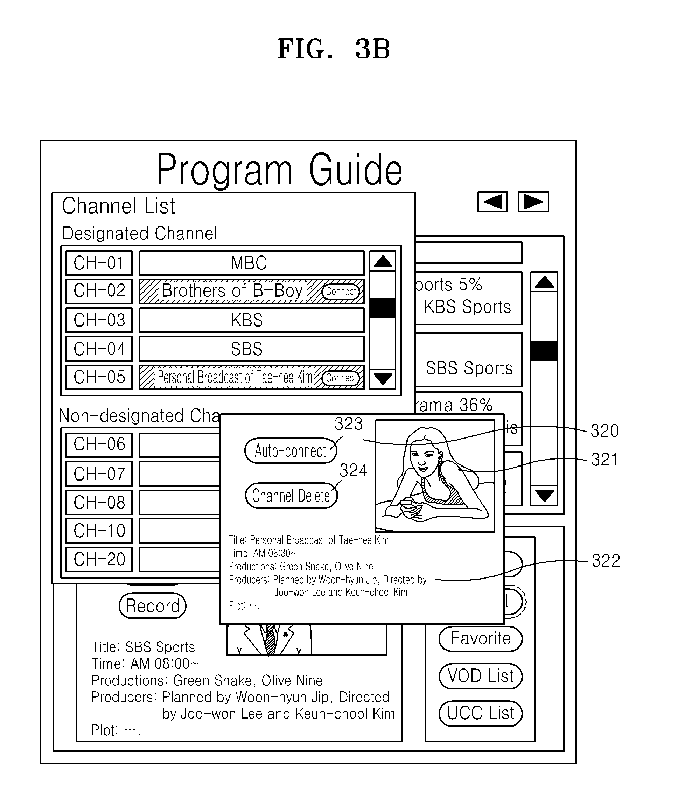

FIGs. 3A and 3B show a screen providing a channel list according to an embodiment of the present invention. FIG. 3A shows a channel list window 310 provided on the screen 200 of FIG. 2, when the channel list icon 40 is selected.

The channel list window 310 includes a designated channel list 311 designated by a user and a non-designated channel list 312 that is not being used. The designated channel list 311 and the non-designated channel list 312 may be separated and shown in separate screens. The designated channel list 311 may include a channel set by an actual broadcast and a channel list designated by the user. Though not required in all aspects, if a channel cannot be currently connected even though the channel is being designated and used, the channel may be shown in a different color or otherwise indicated as not being connected.

Channels 314 and 316, which are designated by the user, are not Internet broadcasts or downloaded and viewed. Instead, the user may easily access desired Internet content using connect icons 315 and 317, in which a process for viewing a VOD, UCC, or the like, which is viewed after an authentication, is programmed. A button, which indicates a connection with an Internet broadcast service of the corresponding channel, may indicate the connection by changing color. For example, when the connection is completed, the color of the button may be purple and when the connection is not completed, the color of the button may change to blue. Other colors may be used as well.

FIG. 3B shows a screen provided when a channel is selected from the designated channel list 311 shown in FIG. 3A. When the user selects CH-5 (channel 316 of FIG. 3A) from a designated channel list 311, a window 320 providing detailed information is displayed. The window 320 includes a part 321, which provides an image or a moving image about the selected broadcast service, and detailed text information 322. Though not required in all aspects, the window 320 further includes an auto-connect icon 323 and a channel delete icon 324. The auto-connect icon 323 is a button to receive corresponding content through an Internet broadcast service, a UCC service, a VOD service, or the like.

If the auto-connect icon 323 is set, the apparatus 100 is automatically connected to a server, which is managed by a corresponding service provider, when the apparatus 100 is turned on. If a fee is to be paid whenever the apparatus 100 is connected to the server, a manual connect icon (not shown) can be additionally prepared so that the connection may be selectively performed by the user.

The channel delete icon 324 is a button to delete a channel designated by the user. If the user selects the channel delete icon 324, all content related to an Internet broadcast service allocated to the selected channel may be deleted from the apparatus 100.

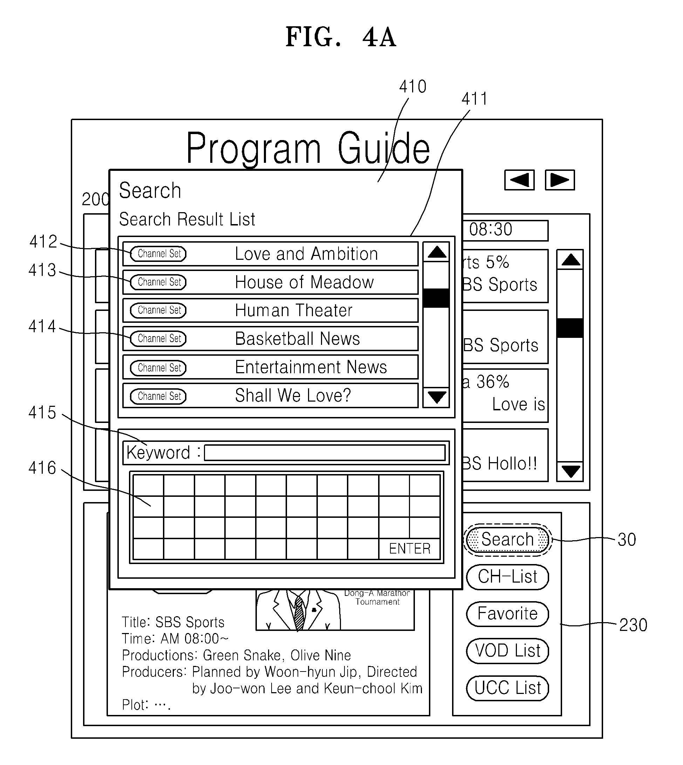

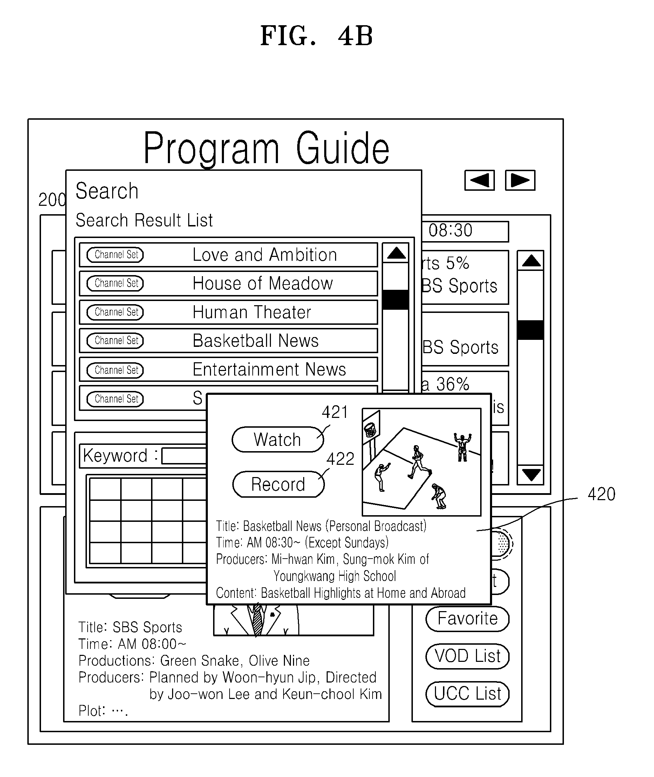

FIGs. 4A and 4B show a screen providing a channel search list according to an embodiment of the present invention. FIG. 4A shows a screen provided when a search icon 30 is selected in the window 230 as shown in FIG. 2. If the search icon 30 is selected, a search window 410 is provided. The search window 410 is a search screen provided for a direct search by the user. The search window 410 may be formed so as to enable the user to set the range of the search. A search result list 411 provides the search results in the form of a list.

A channel set icon 412 may show Internet broadcast program items in different colors based on when a channel is allocated to an Internet broadcast service and when a channel is not allocated to the Internet broadcast service. For example, when a channel set is completed, the color of an Internet broadcast item may be purple; when a channel is not set, the color may be blue; and when a channel cannot be set, the color may be gray. Other colors may be used as well.

A keyword block 415 is a block to allow the user to input a search word. A keyboard block 416 is a block in the form of a keyboard for the user to input a search word including a character, number, symbol, etc. The keyboard block 416 may be used if the user does not have access to a keyboard, and may be omitted in some aspects of the invention (such as where the user has access to a keyboard.) The search result obtained using the search word inputted by the user via the keyword block 415 and/or the keyboard block 416 may be provided in the search result list 411.

FIG. 4B shows the window 420 providing detailed information when the user selects one item from among the search result list 411 shown in FIG. 4A. The user may view broadcast content shown on the window 420 using a watch icon 421 or store the broadcast content using a record icon 422.

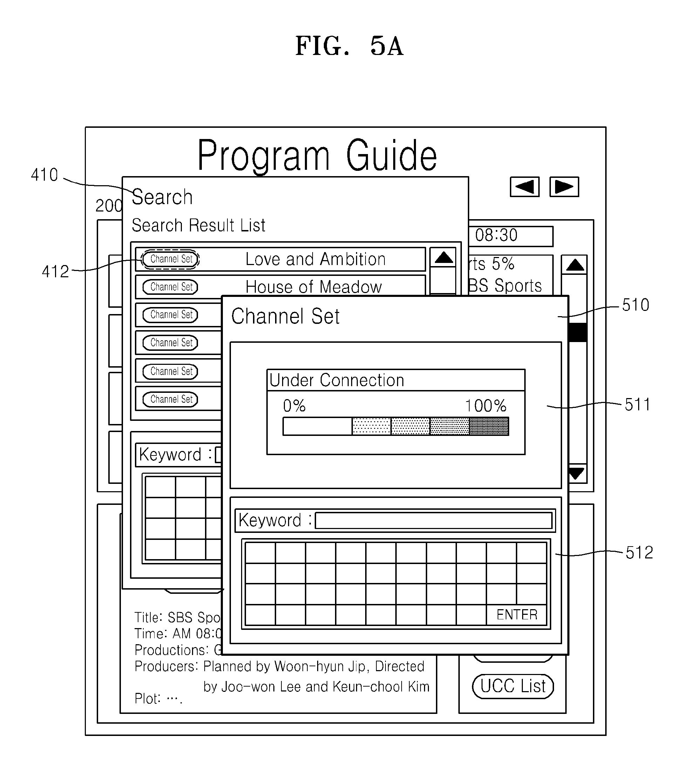

FIGs. 5A through 5C show a screen in which a channel setting operation is being performed, in the apparatus 100. FIG. 5A shows that a channel set window 510 is provided when a channel set icon 412 is selected for one channel item from the search result list 410. The channel set window 510 includes a channel set process block 511, which shows a state of connection to a server (not shown) that provides Internet broadcast content of the selected channel, and a block 512 for a channel search.

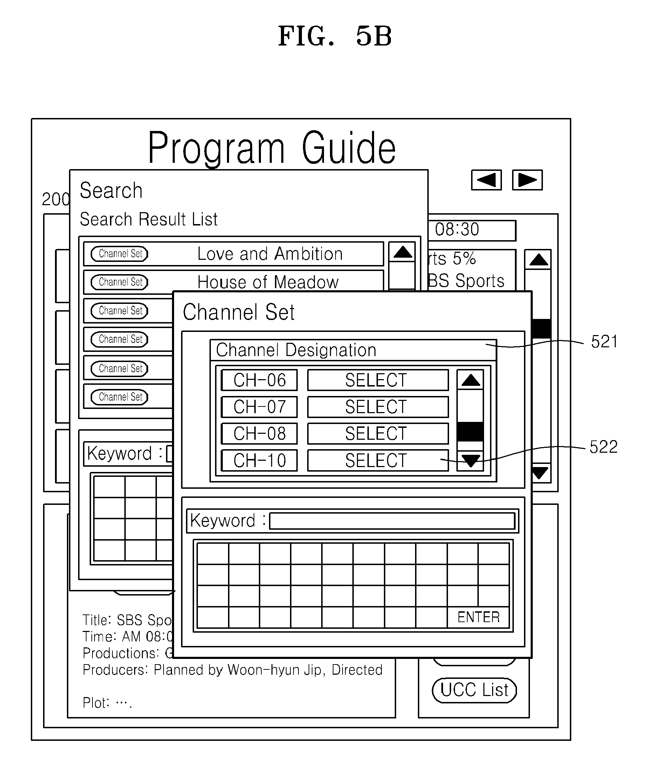

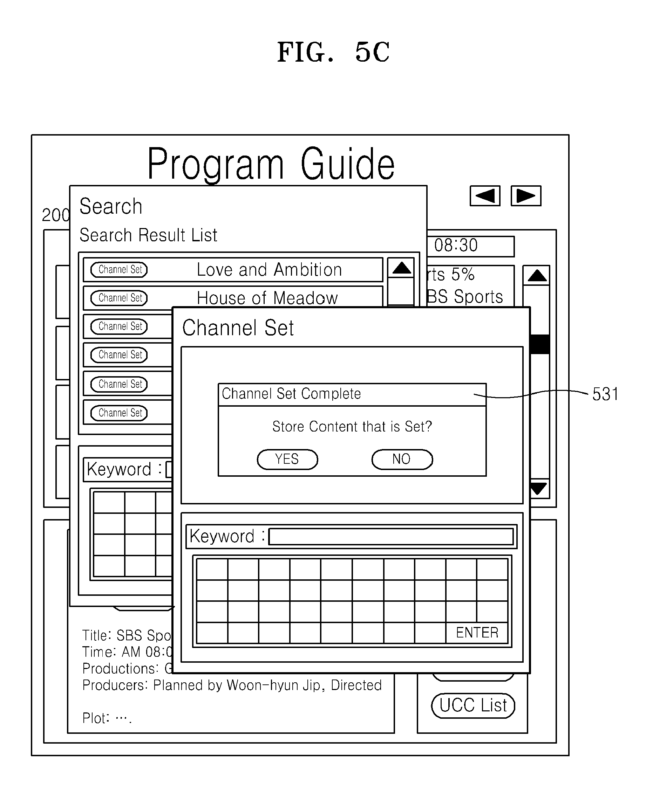

When the connection to the server is completed, a channel designation block 521 is provided on the channel set window 510, as shown in FIG. 5B. A list of non-designated channels shown in the channel designation block 521 is provided. When the user selects a select icon 522 beside each item of channel information, a channel set complete window 531 is provided, as shown in FIG. 5C. When the user selects a YES icon in the channel set complete window 531, the channel set is completed and when the user selects a NO icon, the channel set process is canceled.

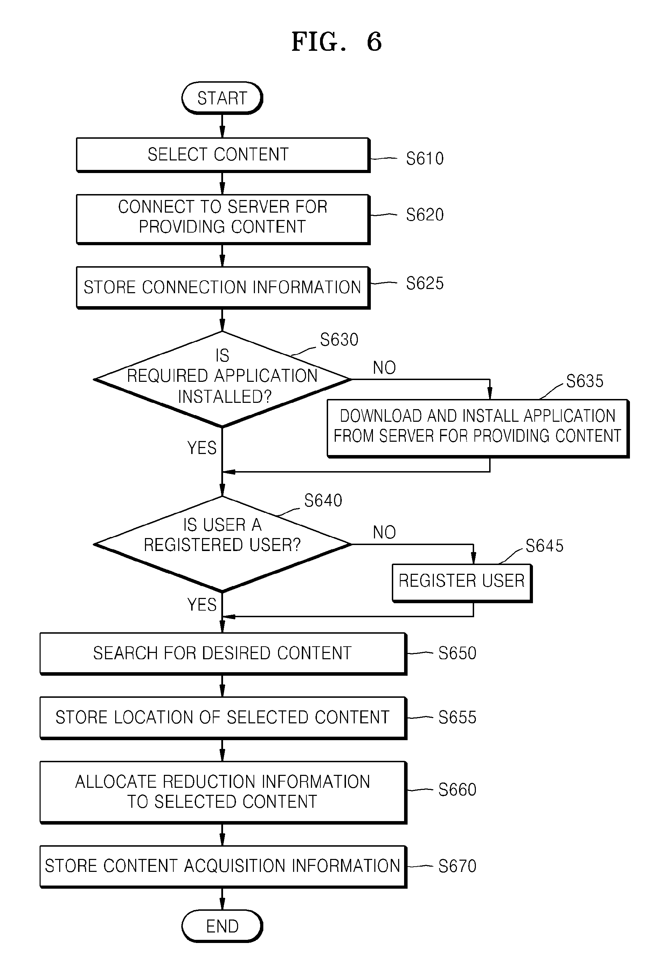

FIG. 6 is a flowchart illustrating a process of storing content acquisition information about content and allocating reduction information to the content acquisition information according to an embodiment of the present invention. The process will be described with reference to FIG. 1 and FIG. 6.

In operation S61 0, the user searches for and selects desired content from the apparatus 100 via the user input unit 150. For example, the user may search for and select desired broadcast content using an EPG, as shown in FIG. 2.

When the content is selected, the apparatus 100 is connected to a server that provides the content. The server provides the selected content in operation S620. The apparatus 100 may pre-store connection information to the server or may be connected to the server by the user inputting the connection information, such as a uniform resource locator (URL).

When the server transmits application information required in providing the content to the apparatus 100, the apparatus 100 determines whether a required application to provide the content is installed, in operation S630. The application may include a media player, such as Gomplay 7.0, or a security program, such as in an imbc.secure1.0.exe form. If the application is not installed, the apparatus 100 installs the application in operation S635. The application may be downloaded from the server. Operation S630 may be performed after another operation according to the operation of the server, for example, after the user logs in to the server.

When the server requests the user to log in, the server may determine whether the user using the apparatus 100 is a registered user in operation S640. When the user inputs authentication information to the apparatus 100, such as a user ID and a password, and the apparatus 100 transmits the authentication information to the server, the server may determine whether the user is a registered user using the authentication information. If the user is not a registered user, the user may register with the server in operation S645 through a process, such as a member registration process. The authentication information input by the user may be stored in the apparatus 100.

In operation S650, the user moves to a desired content providing location and searches for the desired content by searching for a web site that is provided by the server, using the apparatus 100. In operation S655, the apparatus 100 stores the content providing location of the searched content. For example, when the content is a drama Jumong, the content providing location may be http://www/imbc.com/broad/tv/drama/jumong/vod/ index.html. If the content is a serial drama, a plurality of content location information, showing all installments of the serial drama, is stored in the apparatus 100. If the content includes a total of 40 installments, all broadcast program location information related to the 40 installments may be stored in a database of the apparatus 100. Accordingly, when the apparatus 100 reproduces the serial drama and one installment is completed, the apparatus can continuously reproduce the next installment using the location information corresponding to the next installment.

During this process, when the server requests the user to pay a fee for the content and the user provides information required for paying the fee, information input by the user is included as content acquisition information. For example, whenever the user views the content, the user may input information about whether the fees will be paid in a flat rate every month or every year.

In operation S660, reduction information is allocated to the content searched by the user. For example, when the reduction information is based upon a channel, the screen shown in FIG. 5B may be displayed, and thus the user may allocate a previously non-designated channel to the content acquisition information.

In operations S61 0 through S660, network connection information of the server about the content selected by the user, the application the authentication information, and the content location information are stored, and the content acquisition information, required for acquiring the content, is allocated to the reduction information, and finally stored in the apparatus 100. For example, the controller 120 temporarily stores the network connection information, the application, the authentication information, and the content location information of the content selected by the user through operation S61 0 through S660 in a buffer (not shown) of the apparatus 100, allocates the reduction information to the content acquisition information, and stores the reduction information allocated to the content acquisition information in the content acquisition information storage unit 130 in order to manage the content acquisition information.

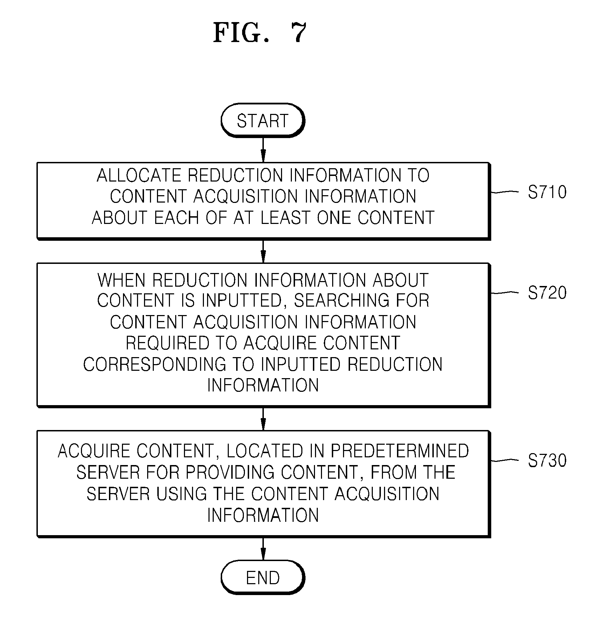

FIG. 7 is a flowchart illustrating a process of providing content through a bidirectional communication network according to an embodiment of the present invention. In operation S710, reduction information is allocated to content acquisition information, which is identified by a content identifier for content obtained via the bidirectional communication network and may be required to acquire content via communication with a server that provides the content. As described with reference to FIG. 6, the content acquisition information may be obtained via communication with the server and may be pre-stored in the apparatus 100.

The content acquisition information may include connection information required to connect to the server and location information showing an actual location of the content in the server. The apparatus 100 accesses the server using the connection information and accesses the content using the location information.

The content acquisition information may further include authentication information for providing authentication to the server if the server requests authentication to provide the content. Although not required in all aspects, the content acquisition information may further include an application when a predetermined application is required to execute the content. In this case, the application may include an application to secure the content and/or a reproduction application to reproduce the content. The content acquisition information may further include information required in performing a payment process, when a payment should be made to acquire the content.

If reduction information about content is inputted, then in operation S720 the controller 120 searches for the content acquisition information required in order to acquire the content corresponding to the inputted reduction information in the content acquisition information storage unit 130.

In operation S730, the controller 120 acquires the content, located in a predetermined server that provides the content, from the server using the content acquisition information via the communicator 110. The controller 120 accesses the server using the connection information included in the content acquisition information and may request the server to provide the content by transmitting the location information to the server. Then, whenever the server requests a process required to provide the content, for example, when the server requests user authentication or requests to pay a content usage fee, the controller 120 performs communication including providing information included in the content acquisition information to the server, so that the process requested by the server can proceed without additional user input. When the apparatus 100 receives a request to update the application from the server while performing operation S730, the apparatus 100 may update the application using the latest information received from the server.

In addition, the present invention can also be embodied as computer readable codes on a computer readable recording medium. The computer readable recording medium is any data storage device that can store data which can be thereafter read by a computer system. Examples of the computer readable recording medium also include read-only memory (ROM), random-access memory (RAM), DVDs, CDs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

As described above, the apparatus stores the content acquisition information, and thus the location information is not required to be inputted in order for the user to access the content and predetermined information is not required to be inputted in order to perform operations such as log in or authentication requested by the apparatus. Also, according to embodiments of the present invention, by allocating the reduction information to the content acquisition information and managing the reduction information, the user can access and acquire the desired content by only inputting the reduction information.

Although a few embodiments of the present invention have been shown and described, it would be appreciated by those skilled in the art that changes may be made in this embodiment without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing content, comprising:
allocating reduction information to previously stored content acquisition information that is, for each of a plurality of selectable content, identified by a content identifier for content acquired through a bidirectional communication network and is necessary to acquire content by communication with a server that provides the content;
searching for the content acquisition information corresponding to the inputted reduction information when the reduction information of the content from among the plurality of selectable content is input; and
acquiring the content from the server using the searched content acquisition information.

2. The method of claim 1, wherein:
the content acquisition information comprises connection information required to connect to the server, and content location information identifying an actual location of the content in the server for providing content; and
the acquiring of the content comprises accessing the server using the connection information; and accessing the content using the content location information.

3. The method of claim 1 or claim 2, wherein the content acquisition information further comprises identification of an application needed to acquire the content, if the application is necessary to use the content.

4. The method of claim 3, further comprising:
receiving a request to update the application from the server; and
updating the application using latest information provided from the server.

5. The method of claim 3 or claim 4, wherein the application comprises an application to secure the content and/or an application to reproduce the content.

6. The method of any preceding claim 1, wherein, when the server requests authentication in order to provide the content, the content acquisition content further comprises authentication information to provide the authentication to the server.

7. The method of any preceding claim, wherein, when a payment must made in order to acquire the content, the content acquisition information further comprises information necessary to perform a payment process to make the payment.

8. The method of any preceding claim, wherein, before the allocating of the reduction information to the content acquisition information, forming the content acquisition information via a data communication process between the server and an apparatus to provide the content received from the server to a user.

9. The method of any preceding claim wherein the content identifier is acquired from an electronic program guide (EPG) or location information identifying an actual location of the content in the server.

10. An apparatus (100) to provide content, comprising:
a content acquisition information storage unit (130) to store, for each of a plurality of selectable content, content acquisition information identified by a content identifier of content acquired through a bidirectional communication network and is necessary to acquire content via communication with a server that provides the content;
a controller (120) to allocate reduction information to the content acquisition information, to search for the content acquisition information corresponding to inputted reduction information when the reduction information of the content among the plurality of selectable content is input; and
a communicator (110) to acquire the content from the server using the content acquisition information.

11. The apparatus (100) of claim 10, wherein:
the content acquisition information comprises connection information necessary to connect to the server, and content location information identifying an actual location of the content in the server; and
the communicator accesses the server using the connection information, and accesses the content using the content location information.

12. The apparatus (100) of claim 10 or claim 11, wherein the content acquisition information further comprises an application, if the application is necessary to reproduce the content.

13. The apparatus (100) of claim 12, wherein, when the communicator (110) receives a request to update the application from the server, the controller updates the application using latest information provided from the server.

14. The apparatus (100) of claim 12 or claim 13, wherein the application comprises an application to secure the content and/or an application to reproduce the content.

15. The apparatus (100) of any one of claims 10 - 14, wherein, when the server requests authentication in order to provide the content, the content acquisition content further comprises authentication information to provide the requested authentication to the server.

16. The apparatus (100) of any one of claims 10, - 15 wherein, when a payment should be made in order to acquire the content, the content acquisition information further comprises information necessary to perform a payment process.

17. The apparatus (100) of any one of claims 10 - 16, wherein at least one portion of the content acquisition information, which is identified by the content identifier and required for acquiring the content, is formed by communication with the server.

18. The apparatus (100) of any one of claims 10 - 17, wherein the content identifier is acquired from an electronic program guide (EPG) or location information identifying an actual location of the content in the server.

19. The apparatus (100) of any one of claims 10 - 18, further comprising a reproduction unit (140) to reproduce the content.

20. The apparatus (100) of any one of claims 10 - 9, wherein the content acquisition information storage unit comprises:
a connection information storage unit (131) to store network connection information necessary to connect to the server;
an application storage unit (133) to store an application necessary to reproduce the content;
an authentication information storage unit (135) to store authentication information necessary to access the content; and
a current location storage unit (137) to store location information identifying an actual location of the content on the server.

21. A computer readable recording medium having recorded thereon a program to execute a method of providing content, the method comprising:
allocating reduction information, for each of a plurality of selectable content, to previously stored content acquisition information, which is identified by a content identifier of acquired through a bidirectional communication network and is necessary to acquire content via communication with a server that provides the content;
searching for the content acquisition information corresponding to the inputted reduction information when the reduction information of the content from among the plurality of selectable content is input; and
acquiring the content from the server using the searched content acquisition information.

22. A method of obtaining content acquisition information about content so as to reproduce the content, the method comprising:
connecting to a server that provides content selected by a user;
storing connection information needed to connect to the server;
searching the server for the content;
storing location information about a location of the content on the server;
allocating reduction information to the content;
allocating content acquisition information to the reduction information, the content acquisition including the connection information and the location information; and
reproducing the content using the reduction information when a command to reproduce the content is received from the user.

23. The method of claim 22, further comprising:
downloading and installing an application necessary to reproduce the content, if the application is not already installed on an apparatus that reproduces the content;
wherein the content acquisition information further includes information about the application.

24. The method of claim 22 or claim 23, further comprising:
obtaining authentication information necessary to access the content; and
storing the authentication information;
wherein the content acquisition information further includes the authentication information.

25. A method of reproducing content via a bidirectional communication network, the method comprising:
allocating reduction information corresponding to content acquisition information necessary to access content available via the bidirectional communication network;
searching for the content acquisition information corresponding to the reduction information, if a command to reproduce content is received from a user;
obtaining content from a server using the content acquisition information; and
reproducing the content;
wherein the content acquisition information includes connection information identifying a location of the server and location information identifying a location of the content on the server.

26. The method of claim 25, wherein the reduction information is channel information.

27. The method of claim 26, wherein the reduction information is channel information relating to Internet Protocol television (IPTV) content.

28. The method of claim 25, wherein the content acquisition information is selectable between first content acquisition information and second content acquisition information, wherein the first content acquisition information corresponds to content acquisition information relating to IPTV content, and the content acquisition information corresponds to content acquisition information relating to Video on Demand (VOD) content.

29. The method of claim 25, wherein the content is one of Internet Protocol television (IPTV), Video on Demand (VOD), or user creative content (UCC).
